# EUROPÄISCHE PATENTSCHRIFT

(11) **EP 1 694 550 B1**
(45) Veröffentlichungstag und Bekanntmachung des Hinweises auf die Patenterteilung: **30.07.2008**
(21) Anmeldenummer: 04803604.0
(22) Anmeldetag: 08.12.2004
(51) Int. Cl.: B62D 5/06, B62D 5/04, F16C 25/08

(54) **LENKSYSTEM**
STEERING SYSTEM
SYSTEME DE DIRECTION

(30) Priorität: 18.12.2003 DE 10359307
(43) Veröffentlichungstag der Anmeldung: 30.08.2006
(73) Patentinhaber: ZF Lenksysteme GmbH, 73527 Schwäbisch Gmünd (DE)
(72) Erfinder: BUDAKER, Martin, 73540 Heubach (DE); BIEBER, Jürgen, 73529 Schwäbisch Gmünd (DE); KNÖDLER, Helmut, 73547 Lorch (DE); SCHMIDT, Michael, 73655 Plüderhausen (DE); DANGELMAIER, Ralf, 73529 Schwäbisch Gmünd (DE)
(86) Internationale Anmeldenummer: PCT/EP2004/013923
(87) Internationale Veröffentlichungsnummer: WO 2005/058671

(56) Entgegenhaltungen:
- EP-A- 0 528 200
- DE-A1- 10 214 276
- DE-A1- 19 935 283

## Beschreibung

Die Erfindung betrifft ein Lenksystem für ein Fahrzeug mit einer drehbar in einem Lager an einem Gestell gelagerten Welle nach dem Oberbegriff des Anspruchs 1.

Lenksysteme für Fahrzeuge weisen u.a. Wellenteile in einem Gestell oder Getriebegehäuse auf, die als Ausgangsglied ausgebildet sind, deren Drehung verursacht durch eine Drehbewegung an einer Lenkhandhabe und / oder durch eine Drehbewegung einer Servomotorwelle eine Lenkwinkelverstellung eines lenkbaren Rades bewirkt. Solche Ausgangsglieder sind als Ritzel oder Lenkspindeln für Zahnstangen- oder Kugelumlauflenkungen ausgebildet und häufig über ein drehelastisches Glied mit einer Eingangswelle des Lenksystems annähernd drehfest verbunden.

Das Ausgangsglied eines solchen Lenksystems ist frei von Axialspiel zu lagern, da es u.a. mit einem Sensor zur Erfassung der Drehrichtung und Drehmomentenstärke in der Eingangswelle zusammenwirkt.

Die DE 199 35 283 A1 beschreibt ein als elektrische Hilfskraftlenkung ausgebildetes Lenksystem, wobei das Ausgangsglied in einem Festlager gelagert ist. Das Ausgangsglied weist zum Zwecke der axialen Festlegung an dessen Ende ein Gewinde und eine darauf geschraubte Mutter auf. Die Mutter stützt das Ausgangsglied axial unverschieblich an einem Innenring des Festlagers ab. Das Festlager kann auch in radialer Richtung mit einem Klemm-Mechanismus geklemmt werden.

Ein weiteres Lenksystem ist durch die EP 0535422 bekannt.

Die bekannten Mittel zur axialen Positionierung des Ausgangsgliedes eignen sich nur bedingt für die Positionierung des Ausgangsgliedes im Bereich von großen Durchmessern des Ausgangsgliedes und sind vergleichsweise aufwendig und teuer darzustellen.

Der Erfindung liegt die Aufgabe zugrunde, eine kostengünstige spielfreie Lagerung für Wellen oder Ausgangsglieder eines Lenksystems zu schaffen.

Die Aufgabe wird mit einem Lenksystem mit den Merkmalen des Anspruchs 1 gelöst.

Dadurch, dass die Welle spielfrei mit dem Lager verbunden ist und das Lager von einem Niederhalter, der sich an dem Gestell und dem Lager axial abstützt, an dem Gestell gehalten ist, ist eine axiale Spielfreistellung der Welle geschaffen, die einfach und kostengünstig darstellbar ist.

Bevorzugte Ausführungen der Erfindung ergeben sich aus den Unteransprüchen.

Bevorzugt ist das Lager als Radial-Rillenkugellager und insbesondere als Hochschulterkugellager ausgebildet und der Niederhalter wirkt in axialer Richtung auf den Außenring des Radiallagers. Der Außenring des Radiallagers wird auf einen Lagersitz an dem Gestell gepresst. Der Niederhalter wirkt zu diesem Zweck bevorzugt auf den gesamten Umfang des Außenringes des Radiallagers und insbesondere mit einem ringförmigen Abschnitt auf den Außenring. Der Niederhalter kann sich dabei axial und radial über einen Sensor oder ein Ventil oder dergleichen an der Welle hülsen- oder zylinderförmig erstrecken.

Es kann zweckmäßig sein, den hülsen- oder zylinderförmigen Niederhalter mit Abschnitten unterschiedlicher lichter Weite oder unterschiedlichen Durchmessers auszubilden, um etwa einen Drehmomenten-Drehzahlsensor zu überkragen. Der Niederhalter kann dazu bevorzugt mit einem vergleichsweise kleinen Durchmesser oder einer lichten Weite an dem Lager ausgebildet sein und einen etwa doppelt so großen Durchmesser oder eine doppelt so große lichte Weite im Bereich des Sensors oder Ventils aufweisen.

Bevorzugt ist der Niederhalter durch ein elastisches Mittel gegen das Lager gedrückt. Das elastische Mittel, welches eine Vorspannkraft erzeugt, kann ein Bereich oder eine Zone erhöhter Elastizität in dem Niederhalter sein. In einem besonders bevorzugten Ausführungsbeispiel ist der Bereich erhöhter Elastizität in dem Niederhalter in einem Übergangsbereich zwischen zwei verschiedenen Durchmessern oder lichten Weiten des Niederhalters angeordnet und in der Art einer Tellerfeder ausgebildet. Der Niederhalter stützt sich in dem Gestelle, das als Getriebegehäuse des Lenksystems gebildet ist, radial in dem Getriebegehäuse ab und ist dadurch einfach zu montieren. Der Niederhalter kommt dabei bevorzugt in einer Gehäusevertiefung zu liegen, die von einem Gehäusedeckel abgeschlossen ist. Auf diese Weise stützt sich der Niederhalter an seinem einen Ende an dem Lager und an seinem anderen Ende an dem Gehäusedeckel ab. Der Niederhalter ist bevorzugt als Press- oder Tiefziehteil einstückig mit etwa gleicher Wandstärke zylinderförmig oder als Stufenzylinder gebildet. Der Niederhalter kann zur Verringerung des Bauraumes des Getriebegehäuses Aussparungen aufweisen, in die Teile des Sensors oder eines Ventils oder dergleichen ragen können.

Die Welle, welche von dem Niederhalter spielfrei gestellt ist, kann als Ausgangsglied in Form eines Ritzels einer Zahnstangenlenkung ausgebildet sein. Es kann zweckmäßig sein, das Ausgangsglied als Gewindespindel einer Kugelumlauflenkung auszubilden.

Das Lenksystem mit der erfindungsgemäßen, spielfreien Lagerung der Welle oder des Ausgangsgliedes kann ein elektrisches und / oder hydraulisches Hilfskraft- oder Fremdkraftlenksystem sein.

Die Erfindung wird nun näher anhand eines Ausführungsbeispiels und anhand der beiliegenden Zeichnung beschrieben.

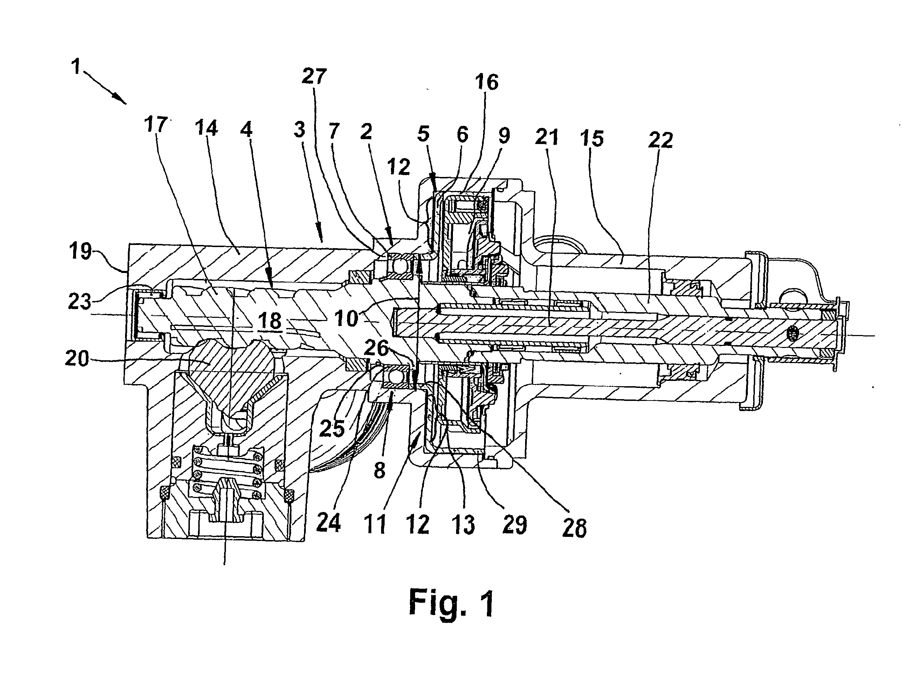

- Fig. 1: zeigt einen Längsschnitt durch ein Zahnstangengetriebe einer elektrischen Hilfskraftlenkung.

In Fig. 1 ist ein Längsschnitt durch ein als Getriebegehäuse 14 ausgebildetes Gestell 3 eines als Zahnstangen-Hilfskraftlenkung ausgebildetes Lenksystems 1 eines Fahrzeugs gezeigt. In dem Getriebegehäuse 14 ist eine Welle 4, die als Ausgangsglied 18 der Zahnstangen-Hilfskraftlenkung ausgebildet ist, drehbar gelagert.

Das Ausgangsglied 18 ist als schrägverzahntes Ritzel 17 ausgebildet und kämmt mit einer Zahnstange 20 an einem Ende 19 des Getriebegehäuses 14. Die Zahnstange 20 ist mit ein oder mehreren lenkbaren Rädern des Fahrzeugs zur Lenkwinkelverstellung der lenkbaren Räder wirkverbunden. Das Ausgangsglied 18 ist über ein drehelastisches Glied 21 mit einer Eingangswelle 22 der Zahnstangen-Hilfskraftlenkung verbunden. Auf die Eingangswelle 22 wird ein Drehmoment einer Lenkhandhabe aufgebracht.

Das Getriebegehäuse 14 ist im wesentlichen zweiteilig ausgebildet und mit einem zylinderförmigen, sich zu der Schnittstelle zwischen Eingangswelle 22 und Ausgangsglied 18 erweiternden Gehäusedeckel 15 verschlossen. Die Eingangswelle 22 erstreckt sich im wesentlichen in den Gehäusedeckel 15.

In einem erweiterten Bereich des Getriebegehäuses 14 ist ein Sensor 9 angeordnet, der das Drehmoment und die Drehrichtung der Eingangswelle 22 misst. In axialer Richtung des Ausgangsgliedes 18 betrachtet, zwischen dem Sensor 9 und dem verzahnten Bereich des Ausgangsgliedes 18 ist ein Lager 2 zur drehbaren Lagerung des Ausgangsgliedes 18 in dem Getriebegehäuse 14 angeordnet. Das Lager 2 ist als Festlager und Radiallager 8 ausgebildet. Es ist bevorzugt ein Hochschulterkugellager, welches entsprechende Axialkräfte in der Lage ist abzustützen.

An dem Ende 19 des Getriebegehäuses 14 ist das Ausgangsglied 18 in einem Nadellager 23 gelagert. Die Lagerung des Ausgangsgliedes 18 ist auf diese Weise einfach und kostengünstig dargestellt, da kleine Lager-Bauformen gewählt sind.

Um das Ausgangsglied 18 insbesondere in axialer Richtung spielfrei zu stellen, ist ein Innenring 24 des Radiallagers 8 mit einem Quetschring 25 gegen einen Bund 26 des Ausgangsgliedes 18 gehalten. Ein Außenring 7 des Radiallagers 8 wird mit einem als Mittel 5 zur axialen Positionierung des Ausgangsgliedes 18 vorgesehenen Niederhalter 6 gegen einen Axialanschlag 27 an dem Getriebegehäuse 14 gedrückt. Das Ausgangsglied 18 ist dadurch axial spielfrei gelagert.

Der Niederhalter 6 ist in dem gezeigten Ausführungsbeispiel als zylinderförmiges, einstückiges Bauteil mit etwa gleicher Wandstärke ausgebildet. Der Niederhalter 6, welcher aus Stahlblech gebildet sein kann, weist an seinem ringförmigen Abschnitt 28 mit dem er an der ganzen Seitenfläche des Außenringes 7 des Radiallagers 8 anliegt, einen Durchmesser 10 auf, der etwa die Hälfte seines Durchmessers im Bereich, in dem er den Sensor 9 überkragt, beträgt. Der Niederhalter 6 stützt sich mit seinem, dem ringförmigen Abschnitt 28 gegenüberliegenden Abschnitt 29, an dem Gehäusedeckel 15 axial ab.

Der Niederhalter 6 weist in dem gezeigten Ausführungsbeispiel einen Übergangsbereich 13 zwischen verschiedenen Durchmessern des Niederhalters 6 auf. Der Übergangsbereich 13 ist als elastisches Mittel 11 vorgesehen, um den Niederhalter 6 axial vorspannen zu können. In dem Übergangsbereich 13 ist ein Bereich 12 erhöhter Elastizität in dem Niederhalter 6 in der Art einer Tellerfeder vorgesehen. Der Niederhalter 6 stützt sich mit seiner gesamten äußeren Mantelfläche radial in dem Getriebegehäuse 14 ab und ist dadurch leicht zu montieren.
Um den Bauraum des Getriebegehäuses 14 zu minimieren, weist der Niederhalter 6 an einzelnen Stellen Aussparungen 16 auf, in die Teile des Sensors 9 ragen können.

Durch die gewählte Dimensionierung des Niederhalters 6 ist der Gehäusedeckel 15 spaltfrei auf dem Getriebegehäuse 14 angeordnet und das Radiallager 8 mit definierter Kraft an dem Getriebegehäuse 14 gehalten.

### BEZUGSZEICHENLISTE

| | | | |
|---|---|---|---|
| 1 | Lenksystem | 26 | Bund, an 18 |
| 2 | Lager | 27 | Axialanschlag |
| 3 | Gestell | 28 | Abschnitt ringförmig, v. 6 |
| 4 | Welle | 29 | Abschnitt, v. 6 |
| 5 | Mittel zur axialen Positionierung | 30 | |
| 6 | Niederhalter | 31 | |
| 7 | Außenring | 32 | |
| 8 | Radiallager | 33 | |
| 9 | Sensor | 34 | |
| 10 | Durchmesser | 35 | |
| 11 | Mittel, elastisch | 36 | |
| 12 | Bereich erhöhter Elastizität | 37 | |
| 13 | Übergangsbereich | 38 | |
| 14 | Getriebegehäuse | 39 | |
| 15 | Gehäusedeckel | 40 | |
| 16 | Aussparung | 41 | |
| 17 | Ritzel | 42 | |
| 18 | Ausgangsglied | 43 | |
| 19 | Ende, v. 14 | 44 | |
| 20 | Zahnstange | 45 | |
| 21 | Drehelastisches Glied | 46 | |
| 22 | Eingangswelle | 47 | |
| 23 | Nadellager | 48 | |
| 24 | Innenring, v. 8 | 49 | |
| 25 | Quetschring | 50 | |
| | | | |
| | | | |
| | | | |
| | | | |
| | | | |

## Patentansprüche

1. Hilfs- oder Fremdkraftlenksystem für ein Fahrzeug, mit einer drehbar in einem Lager (2) an einem Gestell (3) gelagerten Welle (4), welche mit einem lenkbaren Rad zu dessen Lenkwinkelverstellung wirkverbunden ist, und mit einem Mittel (5) zur axialen Positionierung der Welle (4) in dem Gestell (3), wobei das Mittel (5) zur axialen Positionierung ein Niederhalter (6) ist, der sich an dem Gestell (3) und an dem Lager (2) axial abstützt und das Lager (2) axial an dem Gestell (3) hält,
**dadurch gekennzeichnet, dass**
der Niederhalter (6) separat von Gehäuseteilen gestaltet ist und elastische Mittel in einem Übergangsbereich (13) mit erhöhter Elastizität zwischen verschiedenen Durchmessern des Niederhalters aufweist.

2. Lenksystem nach Anspruch 1, **dadurch gekennzeichnet, dass** der Niederhalter (6) auf einen Außenring (7) des als Radiallager (8) ausgebildeten Lagers (2) in axialer Richtung wirkt.

3. Lenksystem nach einem der Ansprüche 1 oder 2, **dadurch gekennzeichnet, dass** der Niederhalter (6) über den Umfang des Lagers (2) verteilt in axialer Richtung wirkt.

4. Lenksystem nach einem der Ansprüche 1 bis 3, **dadurch gekennzeichnet, dass** der Niederhalter (6) im Wesentlichen hülsen- oder zylinderförmig gebildet ist.

5. Lenksystem nach einem der Ansprüche 1 bis 4, **dadurch gekennzeichnet, dass** der Niederhalter (6) an dem Lager (2) einen kleineren Durchmesser (10) oder lichte Weite als in seinem Bereich des Sensors (9) hat.

6. Lenksystem nach einem der Ansprüche 1 bis 5, **dadurch gekennzeichnet, dass** der Niederhalter (6) durch ein elastisches Mittel (11) gegen das Lager (2) gedrückt ist.

7. Lenksystem nach einem der Ansprüche 1 bis 6, **dadurch gekennzeichnet, dass** das Gestell (3) als Getriebegehäuse (14) des Lenksystems (1) ausgebildet ist und der Niederhalter (6) radial in dem Getriebegehäuse (14) anliegt.

8. Lenksystem nach Anspruch 7, **dadurch gekennzeichnet, dass** der Niederhalter (6) sich an einem Gehäusedeckel (15) des Getriebegehäuses (14) abstützt.

9. Lenksystem nach einem der Ansprüche 1 bis 8, **dadurch gekennzeichnet, dass** der Niederhalter (6) einstückig gebildet ist.

10. Lenksystem nach einem der Ansprüche 1 bis 9, **dadurch gekennzeichnet, dass** der Niederhalter (6) eine Aussparung (16) aufweist.

11. Lenksystem nach einem der Ansprüche 1 bis 10, **dadurch gekennzeichnet, dass** die Welle (4) oder das Ausgangsglied (18) ein Ritzel (17) einer Zahnstangenlenkung ist.

12. Lenksystem nach einem der Ansprüche 1 bis 11, **dadurch gekennzeichnet, dass** die Welle (4) oder das Ausgangsglied (18) eine Gewindespindel einer Kugelmutterlenkung ist.

## Claims

1. Power steering system or external power steering system for a vehicle, having a shaft (4) which is rotatably mounted on a frame (3) in a bearing (2) and is operatively connected to a steerable wheel for the adjustment of its steering angle, and having a means (5) for the axial positioning of the shaft (4) in the frame (3), the means (5) for axial positioning being a hold-down (6) which is supported axially on the frame (3) and on the bearing (2) and holds the bearing (2) axially on the frame (3), **characterized in that** the hold-down (6) is configured separately from housing parts and has elastic means in a transition region (13) having increased elasticity between different diameters of the hold-down.

2. Steering system according to Claim 1,
**characterized in that** the hold-down (6) acts in the axial direction on an outer ring (7) of the bearing (2) which is configured as a radial bearing (8).

3. Steering system according to either of Claims 1 and 2, **characterized in that** the hold-down (6) acts in the axial direction in a manner which is distributed over the circumference of the bearing (2).

4. Steering system according to one of Claims 1 to 3, **characterized in that** the hold-down (6) is of substantially sleeve-shaped or cylindrical formation.

5. Steering system according to one of Claims 1 to 4, **characterized in that** the hold-down (6) has a smaller diameter (10) or inside width on the bearing (2) than in its region of the sensor (9).

6. Steering system according to one of Claims 1 to 5, **characterized in that** the hold-down (6) is pressed against the bearing (2) by an elastic means (11).

7. Steering system according to one of Claims 1 to 6, **characterized in that** the frame (3) is configured as a gear mechanism housing (14) of the steering system (1) and the hold-down (6) is in contact radially in the gear mechanism housing (14).

8. Steering system according to Claim 7,
**characterized in that** the hold-down (6) is supported on a housing cover (15) of the gear mechanism housing (14).

9. Steering system according to one of Claims 1 to 8, **characterized in that** the hold-down (6) is formed in one piece.

10. Steering system according to one of Claims 1 to 9, **characterized in that** the hold-down (6) has a cutout (16).

11. Steering system according to one of Claims 1 to 10, **characterized in that** the shaft (4) or the output element (18) is a pinion (17) of a rack and pinion steering system.

12. Steering system according to one of Claims 1 to 11, **characterized in that** the shaft (4) or the output element (18) is a threaded spindle of a ball and nut steering system.

## Revendications

1. Système de direction assistée ou actionnée par force extérieure pour un véhicule, comprenant un arbre (4) monté à rotation dans un palier (2) sur un bâti (3) et connecté fonctionnellement à une roue dirigeable pour son réglage angulaire de direction, et comprenant un moyen (5) pour le positionnement axial de l'arbre (4) dans le bâti (3), le moyen (5) pour le positionnement axial étant un serre-flan (6) qui s'appuie axialement sur le bâti (3) et sur le palier (2), et qui retient le palier (2) axialement sur le bâti (3),
**caractérisé en ce que**
le serre-flan (6) est configuré séparément des parties du boîtier et présente des moyens élastiques dans une région de transition (13) de plus grande élasticité entre différents diamètres du serre-flan.

2. Système de direction selon la revendication 1, **caractérisé en ce que** le serre-flan (6) agit dans la direction axiale sur une bague extérieure (7) du palier (2) réalisé sous forme de palier radial (8).

3. Système de direction selon l'une quelconque des revendications 1 ou 2, **caractérisé en ce que** le serre-flan (6) agit dans la direction axiale de manière répartie sur la périphérie du palier (2).

4. Système de direction selon l'une quelconque des revendications 1 à 3, **caractérisé en ce que** le serre-flan (6) est formé essentiellement en forme de douille ou de cylindre.

5. Système de direction selon l'une quelconque des revendications 1 à 4, **caractérisé en ce que** le serre-flan (6) présente sur le palier (2) un plus petit diamètre (10) ou une plus petite largeur intérieure que dans sa région de capteur (9).

6. Système de direction selon l'une quelconque des revendications 1 à 5, **caractérisé en ce que** le serre-flan (6) est pressé par un moyen élastique (11) contre le palier (2).

7. Système de direction selon l'une quelconque des revendications 1 à 6, **caractérisé en ce que** le bâti (3) est réalisé sous forme de boîtier de transmission (14) du système de direction (1) et le serre-flan (6) s'applique radialement dans le boîtier de transmission (14).

8. Système de direction selon la revendication 7, **caractérisé en ce que** le serre-flan (6) s'appuie sur un couvercle de boîtier (15) du boîtier de transmission (14).

9. Système de direction selon l'une quelconque des revendications 1 à 8, **caractérisé en ce que** le serre-flan (6) est réalisé d'une seule pièce.

10. Système de direction selon l'une quelconque des revendications 1 à 9, **caractérisé en ce que** le serre-flan (6) présente un évidement (16).

11. Système de direction selon l'une quelconque des revendications 1 à 10, **caractérisé en ce que** l'arbre (4) ou l'organe de sortie (18) est un pignon (17) d'une direction à crémaillère.

12. Système de direction selon l'une quelconque des revendications 1 à 11, **caractérisé en ce que** l'arbre (4) ou l'organe de sortie (18) est une broche filetée d'une direction à écrou à billes.
